# EUROPÄISCHE PATENTANMELDUNG

(11) **EP 1 582 622 A2**
(43) Veröffentlichungstag der Anmeldung: **05.10.2005**
(21) Anmeldenummer: 05100589.0
(22) Anmeldetag: 28.01.2005
(51) Int. Cl.: D06N 3/00, D06N 7/00, B32B 27/12, B32B 5/18, E04C 2/24

(54) **Decklagenmaterial auf Vlies- oder Gewebebasis**

(30) Priorität: 04.04.2004 DE 202004005399 U
(71) Anmelder: Schillings, Hans, 41379 Brüggen (DE)
(72) Erfinder: Schillings, Hans, 41379 Brüggen (DE)
(74) Vertreter: Bonsmann, Joachim Bernhard

(57) **Zusammenfassung**

Ein Decklagenmaterial (20) auf Vlies- oder Gewebebasis für mit Decklagen versehene Platten aus flüssigen bzw. Flüssigkeiten enthaltenden Ausgangskomponenten (1) weist eine erste Beschichtung (3) aus pulverförmigem, anorganischem Material und Bindemitteln sowie eine zweite Beschichtung (21) aus pulverförmigem, anorganischem Material und Bindemitteln auf, die auf der der ersten Beschichtung gegenüberliegenden Seite des Vlieses (2) oder Gewebes angeordnet ist. Ein derartiges Decklagenmaterial weist gegenüber bekannten Decklagenmaterialien verbesserte Verarbeitungseigenschaften und eine bessere Haltbarkeit auf.

## Beschreibung

Die Erfindung betrifft ein Decklagenmaterial auf Vlies- oder Gewebebasis für mit Decklagen versehene Platten aus flüssigen bzw. Flüssigkeiten enthaltenden Ausgangskomponenten mit einer ersten Beschichtung aus pulverförmigem anorganischem Material und Bindemitteln.

Beidseitig mit Decklagen versehene Platten wie Gipsplatten und Schaumstoffplatten aus aufgeschäumtem Polystyrol, Polyurethan oder Harnstoff-Formaldehydharz finden in breitem Ausmaß als Bauelemente wie Dachelemente und zur Wärme- und Trittschallisolierung sowie auch als Verpackungsmaterial Verwendung. Die einseitig, meist aber auf beiden Seiten der Platte befindlichen Decklagen erfüllen dabei meist eine Doppelfunktion: zum einen erfüllen sie eine Schutzfunktion bei der Herstellung der Platten, insbesondere um ein Verkleben mit der Form zu verhindern, in der die Aufschäumung erfolgt. Zum anderen verleihen sie den besonders beanspruchten Ober-und Unterflächen der Platten besondere Eigenschaften, wie Stabilität und Festigkeit.

Diesbezüglich ist aus der EP 159 514 B2 ein Decklagenmaterial der eingangs genannten Art bekannt, bei welchem das Vlies oder Gewebe ein Flächengewicht von 35 bis 350 g/m² aufweist und sich hierauf einseitig eine Beschichtung befindet, in der das pulverförmige anorganische Material 80-94 Gewichtsprozent und das Bindemittel mindestens sechs Gewichtsprozent atro ("absolut trocken", d.h. 0% Wassergehalt) der Gesamtbeschichtung ausmacht.

Vor diesem Hintergrund war es Aufgabe der vorliegenden Erfindung, ein Decklagenmaterial mit verbesserten Verarbeitungseigenschaften und einer besseren Haltbarkeit zu entwickeln und bereitzustellen.

Diese Aufgabe wird durch ein Decklagenmaterial mit den Merkmalen des Anspruchs 1 gelöst. Vorteilhafte Ausgestaltungen sind in den Unteransprüchen enthalten.

Demgemäß betrifft die Erfindung ein Decklagenmaterial der eingangs genannten Art, welches dadurch gekennzeichnet ist, dass auf der Seite des Vlieses oder Gewebes, welche der Seite mit der ersten Beschichtung gegenüberliegt, sich eine zweite Beschichtung aus pulverförmigem, anorganischem Material und Bindemitteln befindet.

Bei der Verwendung eines derartigen Decklagenmaterials zur Herstellung von Platten wird das Kernmaterial der Platten auf die erste oder zweite Beschichtung aufgebracht, so dass es nicht mehr unmittelbar mit dem Vlies oder Gewebe in Berührung kommt. In der Praxis hat sich gezeigt, dass dies insbesondere bei der Verwendung von Polyurethanschäumen als Material der Platten von Vorteil sein kann, da bei Eindringen des noch flüssigen Schaums in das Vlies- oder Gewebematerial chemische Veränderungen stattfinden können, die die Schaumbildung beeinträchtigen. Dies ist vor allem bei Vlies-oder Gewebematerialien auf Glasbasis der Fall, bei welchen die Schäume negativ beeinflussende Bindemittel vorhanden sein können. Durch die Abschirmung des Vlieses oder Gewebes mittels der zweiten Beschichtung können derartige Probleme vermieden werden. Dabei zeigt es sich, dass entgegen früheren Annahmen überraschenderweise eine sehr gute Haftung zwischen dem Plattenmaterial und dem Decklagenmaterial hergestellt werden kann.

Anstelle der zweiten Beschichtung kann auch eine Haftlackierung aufgebracht sein.

Gemäß einem weiteren Aspekt der Erfindung betrifft diese ein Decklagenmaterial der eingangs genannten Art, welches dadurch gekennzeichnet ist, dass es oberflächenaktive Substanzen enthält, wobei diese Substanzen insbesondere in Form von Fluorkohlenwasserstoffen vorliegen können. Vorzugsweise werden in der (ersten oder optionalen zweiten) Beschichtung aus pulverförmigem, anorganischem Material und Bindemitteln 0,5% bis 10% des Gesamtgewichtes der Beschichtung durch oberflächenaktive Substanzen gebildet.

Mit der vorstehend beschriebenen Ausgestaltung des Decklagenmaterials wird eine Verbesserung der Schaumstruktur im Grenzbereich Deckschicht-Schaum und die Erzielung hoher Trennkräfte zwischen Deckschicht und Schaum erreicht, indem oberflächenaktive Substanzen in das Decklagenmaterial eingebracht bzw. hierauf aufgetragen werden. Vorzugsweise werden dabei 0,5 bis 10% einer wässrigen Dispersion eines Fluorkohlenwasserstoffes in die die Beschichtungen bildende Paste eingearbeitet. Alternativ kann auch die wässrige Dispersion auf das gefertigte Decklagenmaterial z.B. mittels eines Druckwerkes aufgetragen werden. Mit derartigen Ausbildungen des Decklagenmaterials konnte eine wesentlich verbesserte Haftung zwischen der Decklage und dem Schaum erreicht werden, und im Grenzbereich Decklage-Schaum gab es keine veränderte Schaumstruktur im Vergleich zur aufgebrachten Schaumschicht.

Im Folgenden werden verschiedene vorteilhafte Weiterbildungen der Erfindung beschrieben, welche sich auf Decklagenmaterialien gemäß den oben erläuterten Aspekten der Erfindung beziehen.

So kann sich bei einer bevorzugten Ausgestaltung der Erfindung die erste und zweite Beschichtung auf einem Vlies oder Gewebe mit einem Flächengewicht von 35 bis 350 g/m² befinden, und das pulverförmige anorganische Material kann 60 bis 94 und das Bindemittel mindestens 6 Gew.-% atro der Gesamtbeschichtung ausmachen.

Ein bevorzugtes Verfahren zur Herstellung des Decklagenmaterials liegt in der Verwendung einer Beschichtungsmasse mit einem sehr hohen Feststoffanteil, vorzugsweise von 70 bis 80 Gew.-%. Überraschenderweise ist diese Beschichtung noch mit einer Rackelvorrichtung aufzutragen. Sie wird zweckmäßig mit heißer Umluft getrocknet und ergibt eine einwandfreie geschlossene Beschichtung ohne Blasen, Schrumpf oder Risse.

Durch den ungewöhnlich hohen Anteil an anorganischem Material wird das Vlies oder Gewebe undurchlässig für die flüssigen Ausgangsbestandteile. Der hohe Anteil an anorganischem Material bewirkt außerdem, dass eine mit diesem Decklagenmaterial versehene PU-Hartschaumbahn gegenüber heißem Bitumen, beispielsweise von 180 Grad, beständig ist, und die Decklage nicht zerstört wird. Außerdem ist durch den hohen Anteil an anorganischem Material die Entflammbarkeit gegenüber vorbekannten Materialien weiter herabgesetzt.

Als Bindemittel kommen sowohl solche auf anorganischer Grundlage, wie Wasserglas, als auch solche auf organischer Grundlage, insbesondere Kunststoffbasis, in Betracht. Da Wasserglas als Bindemittel die Decklage ziemlich spröde macht, empfehlen sich dabei auch Abmischungen mit Bindemitteln auf Kunststoffbasis. Anorganische Bindemittel haben den Vorzug, dass sie die Entflammbarkeit weiter herabsetzen.

Die Bindemittel auf Kunststoffbasis werden vorzugsweise als Kunststoffdispersionen mit einem Feststoffgehalt von 35 bis 70 Gew.-% eingesetzt. In Betracht kommen insbesondere Polyvinylchlorid und Polyvinylidenchlorid, die den Vorteil haben, schwer entflammbar zu sein, und Co- und Terpolymerisate des Vinylacetats mit Maleinsäure und Acrylsäure. Besonders bevorzugt sind wegen ihrer guten Bindemitteleigenschaften gegenüber den anorganischen Beschichtungsbestandteilen Styrol-Butadien-Mischpolymerisate und Polymerisate bzw. Mischpolymerisate der Acrylsäure bzw. Methacrylsäure. Die Menge an eingesetzter Kunststoffdispersion hängt etwas vom Feststoffgehalt ab, wobei man, um die für die Trocknung der Beschichtung aufzuwendende Energie gering zu halten, mit Dispersionen möglichst hohen Feststoffanteils arbeitet.

Als anorganisches Material sind die verschiedensten pulverförmigen Stoffe geeignet, insbesondere solche auf mineralischer Basis wie Silikate, Clays u.a.. Wegen seiner leichten Zugänglichkeit und damit vertretbaren Preisgestaltung hat sich Calciumcarbonat als besonders bevorzugt erwiesen.

Zur Erzielung besserer Werte im Brandverhalten empfiehlt sich als anorganisches Material besonders Aluminiumhydroxid oder Aluminiumoxidhydrat, mit denen sich die Entflammbarkeitsstufe A2 erzielen lässt.

Um wirtschaftlich zu bleiben, besteht in einer bevorzugten Ausgestaltung der Erfindung das anorganische Material aus einer Mischung aus 10 bis 50 Gew.-% Calciumcarbonat und 90 bis 50 Gew.-% Aluminiumhydroxid oder Aluminiumoxidhydrat für die Beschichtung. Dabei wird das Decklagenmaterial und die damit abgedeckte PU-Hartschaumplatte um so flammfester, je höher der Anteil an Aluminiumhydroxid oder Aluminiumoxidhydrat ist. Zweckmäßig enthält die Beschichtung noch gewisse Anteile an organischen oder mineralischen Farbstoffen, um dadurch verschiedene Güteklassen der Platte, beispielsweise hinsichtlich des Brandverhaltens zu kennzeichnen. Um dem Deckmaterial seine Transparenz zu nehmen und ein Hindurchschimmern des oft gelblichen PU-Hartschaums zu verhindern, hat sich eine Einfärbung des Deckmaterials u.a. mit Ruß als bevorzugt erwiesen, weil dabei schon geringe Mengen flächendeckend sind.

Für besondere Anwendungszwecke, insbesondere dann, wenn man an einem weißen Decklagenmaterial und damit z.B. an einer weißen Akustikplatte bzw. einer weißen Gipsplatte interessiert ist, hat sich die Zumischung von bis zu 5 Gew.-% Titanoxid-Pulver, bezogen auf die Gesamtmenge aus anorganischem Material als bevorzugt erwiesen.

Das für das Decklagenmaterial verwendete Vlies oder Gewebe hat vorzugsweise ein Flächengewicht zwischen 35 und 350 g/m², bevorzugt von 40 g/m² bis 150 g/m². Die Auftragsgewichte der ersten und/oder zweiten Beschichtung liegen zweckmäßig zwischen 150 und 450 g/m², wobei diese Gewichte in starkem Ausmaße vom Einsatzzweck, der Dicke des Kernmaterials u.ä. Faktoren abhängig sind. Als Vlies- und Gewebematerial hat sich besonders Glasfaservlies bzw. -gewebe bewährt, da es nicht brennbar ist. Als Vlies- und Gewebematerial auf organischer Basis wird zweckmäßig ein solches auf Cellulosebasis eingesetzt. Seines guten Festigkeitswertes wegen ist ein Polyesterfaservlies bevorzugt geeignet. Bei Decklagenmaterial für Gipsplatten wird zweckmäßig sowohl Vlies- als auch ein Gittergewebe gemeinsam verwendet, weil dadurch die Bruchanfälligkeit der Gipsplatten ganz wesentlich verringert werden kann. Durch die gemeinsame Verwendung von Vlies und Gittergewebe lässt sich ganz generell die Längs- und Querfestigkeit beträchtlich erhöhen.

Besonders bevorzugt ist die Verwendung des erfindungsgemäßen Decklagenmaterials für die Herstellung beidseitig mit Decklagen versehener Platten aus flüssigen bzw. Flüssigkeit enthaltenden Ausgangskomponenten, insbesondere zur Herstellung von Gipsplatten und Polyurethan (PU)-Hartschaumplatten. Ganz bevorzugt ist die Verwendung des Decklagenmaterials zur Herstellung von beidseitig mit Decklagen versehenen Platten in einer kontinuierlichen Plattenerzeugungsanlage mit Ober- und Unterband. Es eignet sich natürlich auch als Kaschiermaterial zum nachträglichen Aufkaschieren beispielsweise auf aus einem Block aus aufgeschäumten Polystyrol herausgeschnittenen Polystyrolschaumplatten.

Beispiele für die Herstellung von Decklagenmaterial mit einer einseitigen "ersten" Beschichtung sind in der EP 159 514 B2 sowie der DE 34 08 932 A1 zu finden, welche durch Bezugnahme vollumfänglich in die vorliegende Anmeldung aufgenommen werden. Diese Beispiele können zu Beispielen für die vorliegende Erfindung erweitert werden, indem die dort beschriebenen einseitigen Beschichtungen zweiseitig auf dem Vlies- oder Gewebematerial aufgebracht werden.

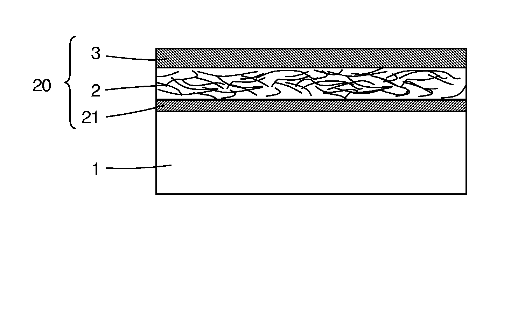

Nachfolgend wird die Erfindung beispielhaft anhand der Figur beispielhaft näher erläutert.

Die einzige Figur zeigt einen Schnitt durch eine Platte mit einem Decklagenmaterial gemäß der Erfindung.

In der Zeichnung ist schematisch ein Schnitt durch eine Platte aus einem (gehärteten) Polyurethanschaum 1 mit einer darauf aufgebrachten Beschichtung aus einem erfindungsgemäßen Decklagenmaterial 20 dargestellt. In der Regel befindet sich auf der gegenüberliegenden (in der Figur unteren) Seite des PU-Hartschaums 1 eine weitere, spiegelbildlich aufgebaute Schicht aus Decklagenmaterial 20 (nicht dargestellt).

Das Decklagenmaterial 20 besteht aus einem Glasfaservlies 2 mit einem Flächengewicht von ca. 35 bis 350 g/m². An der dem Polyurethanschaum 1 abgewandten Seite des Vlieses 2 befindet sich eine erste Beschichtung 3 aus ca. 80 bis 94 Gewichtsprozent pulverförmigem, anorganischem Material mit mindestens 6 Gewichtsprozent Bindemittel. Auf die dem Polyurethan 1 zugewandte Seite des Vlieses 2 ist eine zweite Beschichtung 21 aufgebracht, die aus pulverförmigem, anorganischem Material mit Bindemitteln besteht.

Die beiden Beschichtungen 3 und 21 können in ihrer Dimension und chemischen Zusammensetzung gleich oder unterschiedlich sein. Insbesondere können die Schichten 80-94 Gew.-% pulverförmiges, anorganisches Material mit mindestens 6 Gew.-% Bindemittel enthalten. Der Vorteil der zwischen Glasvlies 2 und PU-Schaum 1 gelegenen zweiten Beschichtung 21 besteht darin, dass sie ein Eindringen des im Ausgangszustand flüssigen PU-Schaums in die Zwischenräume des Glasvlieses 2 und damit auch nachteilige chemische Reaktionen zwischen dem PU und Bindemitteln im Glasvlies 2 verhindert.

Gemäß einer Weiterbildung der Erfindung kann das in der Figur dargestellte Decklagenmaterial 20 auch zur Verbesserung der Schaumstruktur im Grenzbereich Deckschicht-Schaum und die Erzielung hoher Trennkräfte zwischen Deckschicht und Schaum oberflächenaktive Substanzen enthalten. Insbesondere können in die anorganische Beschichtung 3 bzw. 21 ca. 0,5 bis 10% Gewichtsanteile oberflächenaktiver Substanzen, z.B. in Form von einer wässrigen Dispersion von Fluorkohlenwasserstoffen, eingearbeitet werden. Zusätzlich oder alternativ kann nach der grundsätzlichen Fertigstellung der üblichen Decklage (bestehend aus einem Träger und der Pastenbeschichtung) auf der noch offenen Rückseite eine wässrige Dispersion von einem Fluorkohlenwasserstoff mit Auftragsgewichten von 3 bis 10 g/m² aufgebracht werden.

Bei einem Versuchsbeispiel wurde diesbezüglich eine wässrige Dispersion mit 30% von einem Fluoralkylpolyacrylat mit einer Konzentration von 4% in die Beschichtungspaste eingearbeitet und in üblicher Weise auf einen Glasvliesträger mit ca. 200 g/m² aufgebracht. Weiterhin wurde die genannte wässrige Dispersion mit einem Druckwerk auf die Rückseite der Deckschicht mit ca. 5 g/m² als Dispersion aufgebracht. Diese Dispersion benetzte die noch offenen Glasvliesanteile und drang in die Rückseite der Dispersion ein. Die anschließende Versuchsbeschäumung brachte für beide Trägersysteme die gewünschten Ergebnisse.

## Patentansprüche

1. Decklagenmaterial (20) auf Vlies- oder Gewebebasis für mit Decklagen versehene Platten aus flüssigen bzw. Flüssigkeiten enthaltenden Ausgangskomponenten (1), mit einer ersten Beschichtung (3) aus pulverförmigem, anorganischem Material und Bindemitteln,
**gekennzeichnet durch** eine zweite Beschichtung (21) aus pulverförmigem, anorganischem Material und Bindemitteln, die auf der der ersten Beschichtung gegenüberliegenden Seite des Vlieses (2) oder Gewebes angeordnet ist.

2. Decklagenmaterial (20) auf Vlies- oder Gewebebasis für mit Decklagen versehene Platten aus flüssigen bzw. Flüssgkeiten enthaltenden Ausgangskomponenten (1) mit einer ersten Beschichtung (3) aus pulverförmigem, anorganischem Material und Bindemitteln,
**gekennzeichnet durch** eine als aufgebrachte Haftlackierung ausgebildete zweite Beschichtung, die auf der der ersten Beschichtung gegenüberliegenden Seite des Vlieses (2) oder Gewebes angeordnet ist.

3. Decklagenmaterial (10, 20) auf Vlies- oder Gewebebasis für mit Decklagen versehene Platten aus flüssigen bzw. Flüssigkeiten enthaltenden Ausgangskomponenten (1), mit einer ersten Beschichtung (3) aus pulverförmigem, anorganischem Material und Bindemitteln, insbesondere Decklagenmaterial nach Anspruch 1 oder 2,
**dadurch gekennzeichnet, dass** es oberflächenaktive Substanzen, insbesondere in Form von Fluorkohlenwasserstoffen enthält.

4. Decklagenmaterial (10, 20) nach einem der Ansprüche 1 bis 3,
**dadurch gekennzeichnet, dass** in einer Beschichtung (3, 21) aus pulverförmigem, anorganischem Material und Bindemitteln 0,5% bis 10% des Gesamtgewichtes der Beschichtung durch oberflächenaktive Substanzen gebildet wird.

5. Decklagenmaterial (10, 20) nach einem der Ansprüche 1 bis 4,
**dadurch gekennzeichnet, dass** das Vlies (2) oder Gewebe ein Flächengewicht von 35 bis 350 g/m² aufweist, und dass in der ersten und/oder zweiten Beschichtung (3, 21) das pulverförmige, anorganische Material 80 bis 94 Gew.-% und das Bindemittel mindestens 6 Gew.-% atro der Gesamtbeschichtung ausmacht.

6. Decklagenmaterial (10, 20) nach einem der Ansprüche 1 bis 5,
**dadurch gekennzeichnet, dass** das Bindemittel aus einer Kunststoffdispersion mit 35 bis 70 Gew.-% Feststoffanteil gebildet ist.

7. Decklagenmaterial (10, 20) nach einem der Ansprüche 1 bis 6,
**dadurch gekennzeichnet, dass** das Bindemittel aus einem Latex auf Basis von Styrol-Butadien-Mischpolymerisaten gebildet ist.

8. Decklagenmaterial (10, 20) nach einem der Ansprüche 1 bis 6,
**dadurch gekennzeichnet, dass** das Bindemittel aus einem Latex auf Basis von Polymerisaten oder Mischpolymerisaten der Acrylsäure bzw. Methacrylsäure gebildet ist.

9. Decklagenmaterial (10, 20) nach einem der Ansprüche 1 bis 5,
**dadurch gekennzeichnet, dass** das Bindemittel auf anorganischer Grundlage beruht.

10. Decklagenmaterial (10, 20) nach einem der Ansprüche 1 bis 9,
**dadurch gekennzeichnet, dass** das Bindemittel Wasserglas ist.

11. Decklagenmaterial (10, 20) nach einem der Ansprüche 1 bis 10,
**dadurch gekennzeichnet, dass** das Bindemittel aus einer Abmischung von Wasserglas und Kunststoffdispersion gebildet ist.

12. Decklagenmaterial (10, 20) nach einem der Ansprüche 1 bis 11,
**dadurch gekennzeichnet, dass** das anorganische Material Calciumcarbonat umfasst.

13. Decklagenmaterial (10, 20) nach einem der Ansprüche 1 bis 12,
**dadurch gekennzeichnet, dass** das anorganische Material Aluminiumhydroxid oder Aluminiumoxidhydrat umfasst.

14. Decklagenmaterial (10, 20) nach einem der Ansprüche 1 bis 13,
**dadurch gekennzeichnet, dass** das anorganische Material eine Mischung aus 10 bis 50% Calciumcarbonat und 90 bis 50% Aluminiumhydroxid oder Aluminiumoxidhydrat ist.

15. Decklagenmaterial nach einem der Ansprüche 1 bis 14,
**dadurch gekennzeichnet, dass** die Beschichtung (3, 21) organische oder mineralische Farbstoffe enthält.

16. Decklagenmaterial nach einem der Ansprüche 1 bis 14,
**dadurch gekennzeichnet, dass** das anorganische Material zusätzlich bis zu 5 Gew.-% Titandioxidpulver bezogen auf die Gesamtmenge an anorganischem Material als mineralischen Farbstoff enthält.

17. Decklagenmaterial nach einem der Ansprüche 1 und 3 bis 16,
**dadurch gekennzeichnet, dass** das Auftragsgewicht der ersten Beschichtung zwischen 150 und 450 g/m² und der zweiten Beschichtung (3, 21) zwischen 100 und 300g/m² liegt.

18. Decklagenmaterial nach einem der Ansprüche 1 bis 17,
**dadurch gekennzeichnet, dass** das Vlies (2) oder Gewebe aus Glas besteht oder Glas enthält.
